# EUROPÄISCHE PATENTANMELDUNG

(11) **EP 3 736 125 A1**
(43) Veröffentlichungstag der Anmeldung: **11.11.2020**
(21) Anmeldenummer: 20172787.2
(22) Anmeldetag: 04.05.2020
(51) Int. Cl.: B32B 5/02, B32B 7/02, B32B 29/00, B65D 65/00

(54) **FASERERZEUGNIS MIT ABSORBIERENDEN EIGENSCHAFTEN UND SPERREIGENSCHAFTEN**

(30) Priorität: 09.05.2019 DE 102019003291; 09.05.2019 DE 202019002059 U
(71) Anmelder: Baden Board GmbH, 76593 Gernsbach (DE)
(72) Erfinder: Huber, Wolfgang, 77876 Kappelrodeck (DE); Schulz, Jürgen, 56727 Mayen (DE)
(74) Vertreter: Keil & Schaafhausen Patentanwälte PartGmbB

(57) **Zusammenfassung**

Die Erfindung gibt ein Fasererzeugnis für Verpackungen mit mindestens einer Faserlage an. Dieses Fasererzeugnis zeichnet sich dadurch aus, dass wenigstens eine Faserlage adsorbierend und mindestens eine weitere Lage mit Sperreigenschaften für fettende und/oder nichtfettende Flüssigkeiten, und/oder Öl, und/oder Wasser, und/oder Blut, und/oder Fett ausgerüstet ist. Das Fasererzeugnis kann in Form von Papier, Karton oder Pappe vorliegen.

## Beschreibung

Fasererzeugnis mit adsorbierenden Eigenschaften und Sperreigenschaften.

Die Erfindung betrifft Fasererzeugnisse für Verpackungen mit mindestens einer Faserlage.

Bei zu verpackendem Gut, das in einem Lagermedium, wie einer Flüssigkeit, Öl, Wasser, Blut, Fett oder dergleichen, zu Konservierungszwecken gelagert wird, tritt das Problem auf, dass das Lagermedium in das Fasererzeugnis für die Verpackung eindringt und auf der Sichtseite der Verpackung unansehnliche Flecken oder allgemein gesprochen sich eine unansehnlichen Optik ergibt. Selbst wenn man versucht, die dem Verpackungsgut zugewandte Seite mit einer Folie oder einer Barriere auszurüsten, um zu verhindern, dass das Lagermedium zur sichtbaren Außenseite der Verpackung gelangt, tritt das Lagermedium an dem Verpackungsmittelrand meist aus, und gelangt hierüber auf die Außenseite der Verpackung, so dass diese eine unansehnliche Optik bekommt.
Der Erfindung liegt die Aufgabe zu Grunde, unter Überwindung der vorgeschilderten Schwierigkeiten ein Fasererzeugnis für Verpackungen bereitzustellen, welches auf effiziente und einfache Weise ein Durchdringen des Lagermediums bis zur sichtbaren Außenseite verhindert.

Mit der Erfindung wird hierzu ein Fasererzeugnis für Verpackungen mit mindestens einer Faserlage bereitgestellt, das sich dadurch auszeichnet, dass wenigstens eine Faserlage adsorbierend und mindestens eine weitere Lage mit Sperreigenschaften für fettende und/oder nichtfettende Flüssigkeiten und/oder Öl, und/oder Wasser, und/oder Blut, und/oder Fett ausgerüstet ist.

Mit anderen Worten ist das Fasererzeugnis für Verpackungen nach der Erfindung derart beschaffen, dass einerseits Lagermedien, wie Flüssigkeiten oder dergleichen, zuverlässig und vollständig adsorbiert oder aufgesaugt werden können, und zugleich die Lage mit Sperreigenschaften für das Lagermedium, wie Flüssigkeiten oder dergleichen, wirksam die Gutverpackung nach außen schützt oder eine Sperre für das weitere Durchdringen des Lagermediums bildet. Hierdurch lässt sich das Erscheinungsbild von Verpackungen, welche ein Gut enthalten, das in einem Lagermedium zu Konservierungszwecken und Transport- und Aufbewahrungszwecken bereit gehalten wird, mit einem optisch ansprechenden Äußeren erhalten, ohne dass zusätzliche Umverpackungen erforderlich sind, so dass sich die Herstellung von Verpackungen aus so einem Fasererzeugnis nach der Erfindung vereinfachen und kostengünstiger darstellen lässt.

Bevorzugte Weiterbildungen der Erfindung sind in den Unteransprüche 1 bis 5 wiedergegeben. Insbesondere kann zusätzlich ein Adsorber in einer der adsorbierenden Faserlagen eingebracht werden. Hierbei kann es sich um Öl- oder Fettadsorber beispielsweise handeln. Als besonders zweckmäßig als Adsorber hat sich aktiviertes Aluminiumoxid erwiesen.

Das Fasererzeugnis für Verpackungen nach der Erfindung wird als Papier, Karton oder Pappe hergestellt.

Weitere Einzelheiten, Merkmale und Vorteile der Erfindung ergeben sich aus der nachstehenden Beschreibung von bevorzugten Ausführungsbeispielen ohne beschränkenden Charakter unter Bezugnahme auf die beigefügte Zeichnung.

In den Figuren der Zeichnung sind gleiche oder ähnliche Teile mit denselben Bezugszeichen versehen.

In der Zeichnung zeigt:
Fig. 1 bis 6 Ausführungsbeispiele in einer perspektivischen Ausschnittsansicht.

Ein Fasererzeugnis als Ausführungsbeispiel in Fig. 1 ist insgesamt mit 1, das Fasererzeugnis in Fig. 2 insgesamt mit 2, das Fasererzeugnis in Fig. 3 insgesamt mit 3, das Fasererzeugnis in Fig. 4 insgesamt mit 4, das Fasererzeugnis in Fig. 5 insgesamt mit 5 und das Fasererzeugnis in Fig. 6 insgesamt mit 6 bezeichnet.

Selbstverständlich handelt es sich bei den dargestellten Erzeugnissen um nicht beschränkende Ausführungsbeispiele.

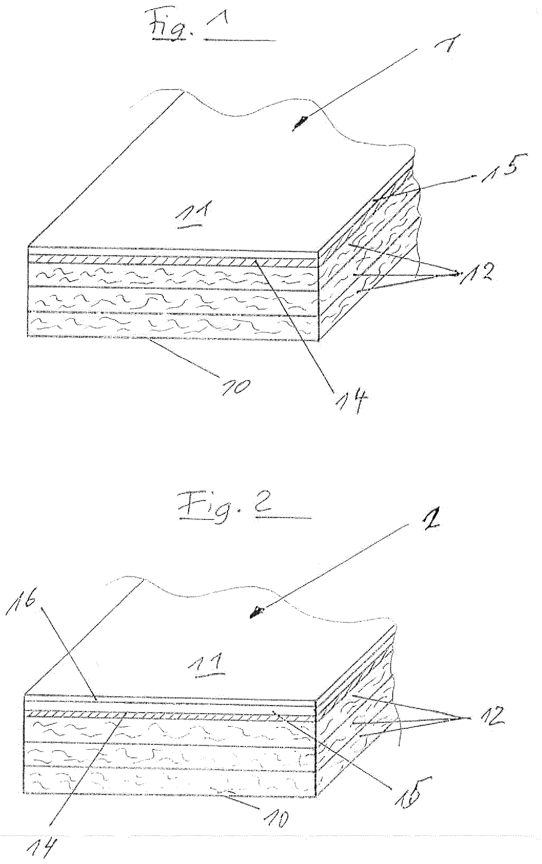

In Fig. 1 ist ein Fasererzeugnis 1 mit mehrschichtigem Aufbau gezeigt. An der dem Verpackungsgut zugewandten Innenseite 10 sind übereinanderliegend drei Faserlagen 12 angeordnet, die von Haus aus adsorbierend wirken. Auf der sichtbaren Außenseite 11 ist ein Strichauftrag 15 vorgesehen. Zwischen den allgemeinen Faserlagen 12 und der sichtbaren Außenseite 11 und dem Strichauftrag 15 ist eine Lage 14 mit Sperreigenschaften vorgesehen. Somit kann das Lagermedium für das verpackte Gut zuverlässig nicht bis zur sichtbaren Außenseite 11 gelangen und/oder in den Strichauftrag 15 eindringen.

Bei dem in Fig. 2 hergestellten Fasererzeugnis ist ein ähnlicher Aufbau wie im Beispiel nach Fig. 1 bezüglich eines mehrlagigen Fasererzeugnisses gezeigt. Bei dieser Ausführungsvariante ist auf der sichtbaren Außenseite 11 zusätzlich noch ein Druckauftrag 16 auf einem Strichauftrag 15 vorgesehen.

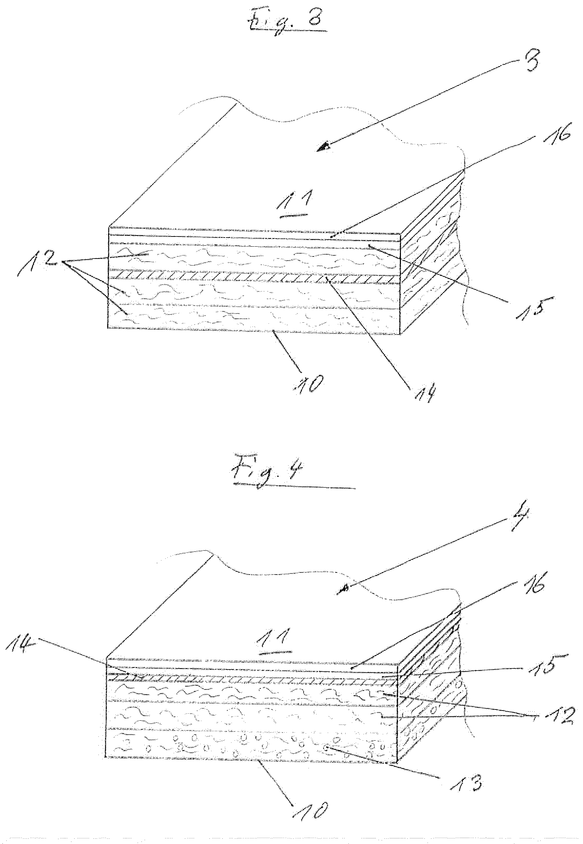

Bei dem Fasererzeugnis 3 nach Fig. 3 mit einem mehrlagigen Aufbau ist die Lage 14 mit Sperreigenschaften als Zwischenlage zwischen der allgemein adsorbierenden Faserlage 12 vorgesehen. Auf der sichtbaren Außenseite 11 ist ein Druckauftrag 16 und ein Strichauftrag 15 vorgesehen.

Bei der Ausführungsvariante nach Fig. 4 ist das insgesamt mit 4 bezeichnete Fasererzeugnis zusätzlich zu der Ausführungsvariante nach Fig. 2 auf der dem Verpackungsgut zugewandten Seite 10 mit einer Faserlage 13 mit zusätzlichem Adsorber versehen.

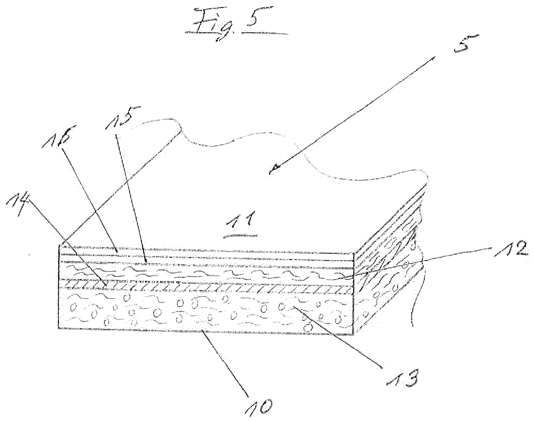

Bei der Ausführungsvariante des Fasererzeugnisses 5 nach Fig. 5 ist ein ähnlicher Aufbau wie bei dem Fasererzeugnis nach Fig. 3 vorhanden, aber die dem Verpackungsgut zugewandte Innenseite 10 hat eine Faserlage 13 mit einem zusätzlichen Adsorber.

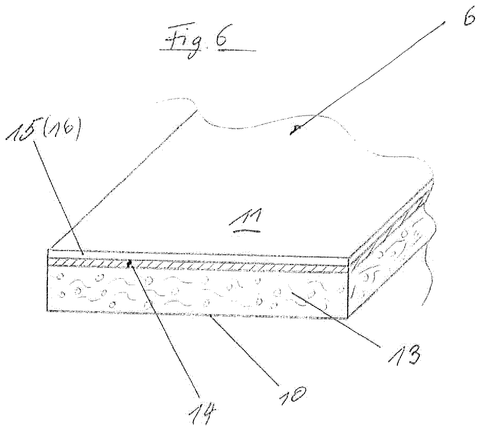

Bei dem Fasererzeugnis 6 nach Fig. 6 schließlich hat man zwar einen mehrschichtigen Aufbau, wobei aber auf der dem Verpackungsgut zugewandten Innenseite 10 nur eine Faserlage 13 mit zusätzlichem Adsorber vorgesehen ist. Die sichtbare Außenseite 11 wird entweder von einem Strichauftrag 15 oder einem Druckauftrag 16 gebildet.

Selbstverständlich ist die Erfindung nicht auf die dargestellten Ausführungsformen beschränkt, sondern es sind zahlreiche Abänderungen und Modifikationen möglich, die der Fachmann im Bedarfsfall treffen wird, ohne den Erfindungsgedanken zu verlassen. Allen Ausführungsvarianten ist gemein, dass die dem Verpackungsgut zugewandte Faserlage 10 entweder eine eigene Faserlage oder eine Faserlage 13 mit zusätzlichem Adsorber ist, dass aber der sichtbaren Verpackungsaußenseite 11 vorgeschaltet eine Lage 14 mit Sperreigenschaften vorgesehen ist.

### Bezugszeichenliste

- 1: Fasererzeugnis insgesamt in Fig. 1
- 2: Fasererzeugnis insgesamt in Fig. 2
- 3: Fasererzeugnis insgesamt in Fig. 3
- 4: Fasererzeugnis insgesamt in Fig. 4
- 5: Fasererzeugnis insgesamt in Fig. 5
- 6: Fasererzeugnis insgesamt in Fig. 6
- 10: Faserlage, welche dem Verpackungsgut zugewandt liegt
- 11: sichtbare Verpackungsaußenseite
- 12: Faserlage allgemein
- 13: Faserlage mit zusätzlichem Adsorber
- 14: Lage mit Sperreigenschaft
- 15: Strichauftrag
- 16: Druckauftrag

## Patentansprüche

1. Fasererzeugnis für Verpackungen mit mindestens einer Faserlage, **dadurch gekennzeichnet, dass** wenigstens eine Faserlage des Fasererzeugnisses adsorbierend, und mindestens eine weitere Lage mit Sperreigenschaften für fettende und/oder nichtfettende Flüssigkeiten und/oder Öl, und/oder Waser, und/oder Blut, und/oder Fett ausgerüstet ist.

2. Fasererzeugnis für Verpackungen nach Anspruch 1, **dadurch gekennzeichnet, dass** wenigstens eine adsorbierende Lage des Fasererzeugnisses die mindestens eine Faserlage an sich ist, und/oder zusätzlich einen Adsorber enthält.

3. Fasererzeugnis nach Anspruch 2, **dadurch gekennzeichnet, dass** als zusätzlicher Adsorber vorzugweise für fettende und/oder nichtfettende Flüssigkeiten und/oder ein Öl- oder Fettadsorber vorhanden ist.

4. Fasererzeugnis für Verpackungen nach Anspruch 2 oder 3, **dadurch gekennzeichnet, dass** der Adsorber aktiviertes Aluminiumoxid ist, oder Ton oder Trass oder ein Superadsorber für Öl, wie z.B. ein Polyolefin-Terpolymer oder Gemische hiervon ist.

5. Fasererzeugnis für Verpackungen nach einem der vorangehenden Ansprüche, **dadurch gekennzeichnet, dass** das Fasererzeugnis als Papier, Karton oder Pappe ausgelegt ist.
